# EUROPÄISCHE PATENTSCHRIFT

(11) **EP 0 380 931 B1**
(45) Veröffentlichungstag und Bekanntmachung des Hinweises auf die Patenterteilung: **01.06.1994**
(21) Anmeldenummer: 90100407.7
(22) Anmeldetag: 10.01.1990
(51) Int. Cl.: B29B 13/06, C08F 6/00

(54) **Verfahren zur kontinuierlichen Trocknung von hydrophilen Polymergelen**
Method of continuously drying hydrophilic polymer gels
Procédé de séchage en continu des gels hydrophiles polymères

(30) Priorität: 30.01.1989 AT 175/89
(43) Veröffentlichungstag der Anmeldung: 08.08.1990
(73) Patentinhaber: Chemie Linz Gesellschaft m.b.H., A-4021 Linz (AT)
(72) Erfinder: Pieh, Stefan, Dr., A-4060 Leonding (AT); Willert, Gerhard, A-4223 Katsdorf (AT)
(74) Vertreter: Kunz, Ekkehard, Dr.

(56) Entgegenhaltungen:
- DE-A- 2 717 630
- FR-A- 2 224 268
- FR-A- 2 306 217
- FR-A- 2 358 422
- US-A- 1 735 397
- US-A- 3 905 122
- US-A- 4 030 205
- US-A- 4 138 539
- STÄRKE, Band 36, Nr. 11, November 1984, Seiten 369-373, Weinheim, DE; D. HESS:"Comparison of processing economics of different starch dryers"
- PATENT ABSTRACTS OF JAPAN, Band 007, Nr. 053 (C-154), 3. März 1983;& JP-A-57 202 308 (MITSUBISHI) 11-12-1982

## Beschreibung

Die Erfindung betrifft ein Verfahren zur kontinuierlichen Trocknung von hydrophilen Polymergelen, bei dem die Polymerteilchen während der Trocknung durch einen schnellaufenden Rotor laufend am Agglomerieren gehindert werden.

Hydrophile Polymergele (Hydrogele) fallen nach der Polymerisation in Form eines gummielastischen Gels mit einem Wassergehalt von etwa 50 bis 80 % an. Sie weisen eine große Haftfähigkeit auf, sodaß sie dazu neigen, mit sich selbst oder mit der umgebenden Wandung zu verkleben und dabei Agglomerate zu bilden.

Zur Trocknung der Hydrogele ist eine ausreichende und homogene Vorzerkleinerung sinnvoll, da die Trocknungsgeschwindigkeit in hohem Maße von der Korngröße abhängt. Die Trocknung der Hydrogele gestaltet sich vor allem wegen ihrer großen Klebrigkeit und Haftfähigkeit sehr schwierig und aufwendig, da die Teilchen sehr leicht agglomerieren bzw. sich als feste Schicht an der Trocknerwand aufbauen. Dadurch wird einerseits der Transport des Wassers aus dem Hydrogel bedeutend erschwert, andererseits wird der Wärmeübergang von der beheizten Trocknerwand durch das anhaftende, als Isolierschicht wirkende Hydrogel in hohem Maße beeinträchtig. Ein weiteres Problem stellt die Bildung einer festen Polymerhaut auf der Oberfläche der Polymerteilchen dar, wodurch die Stoffübergangsgeschwindigkeit des Wassers aus dem Hydrogel stark herabgesetzt und der Trocknungsprozeß zusätzlich erschwert wird (US-PS 3 905 122, JP-Kokai 61-127707 (1986)).

Um ein Kieben und Agglomerieren zu vermeiden, wird bei der Trocknung von Gelen, im Gegensatz zu rieselfähigen Substanzen, vor allem darauf Bedacht genommen, die Gelteilchen nur sehr wenig miteinander in Kontakt zu bringen und sie nicht bzw. nur sehr wenig gegeneinander zu bewegen. Aus diesem Grund wird zur Trocknung von Gelen vor allem der Bandtrockner verwendet, wobei die Trocknung mittels Heißluft erfolgt. Gemäß US-PS 4 138 539 wird ein Polymergel-Granulat mit einem Wassergehalt von 65 Gew.% auf dem Bandtrockner zunächst während 1 Stunde bei 85°C bis zu einem Wassergehalt von 60 Gew.% vorgetrocknet, dann gebrochen und schließlich in einem weiteren Arbeitsschritt während 1,5 Stunden bei 85°C bis zu einer Restfeuchte von 8,4 Gew.% fertiggetrocknet. Der Nachteil dieses Verfahrens liegt vor allem darin, daß es sehr aufwendig ist und insbesondere auf Grund der geringen Bandgeschwindigkeit und geringen Schichthöhe, die für eine ausreichende Trocknung erforderlich sind, nur eine geringe Raum-Zeit-Ausbeute und damit eine nur geringe Effektivität erreicht wird.

In der US-PS 3 905 122 wird ein extrudierter Hydrogel-Strang diskontinuierlich mittels Heißluft in einem rotierenden Trommeltrockner getrocknet. Die Trocknerleistung liegt hier ebenfalls sehr niedrig, eine ausreichende Trocknung kann nur über extrem lange Trocknungszeiten von bis zu 270 min erreicht werden. Der Einbau von langsam laufenden Rührarmen zur Trocknung von nicht gelartigen Kunststoffen, beispielsweise von Polyethylenterephthalat, ist in US-A-4,030,205 beschrieben.

Weitere Versuche, das Problem der Trocknung von Hydrogelen zu lösen, führten zur DE-PS 27 17 630, in der die Polymerisation und gleichzeitige Trocknung unter Ausnutzung der Reaktionswärme von Polyacrylamiden beschrieben wird. Wegen der dabei resultierenden hohen Polymerisationstemperatur und der schwierigen Kontrolle des Verfahrens kommt es dabei jedoch zu einem nicht einheitlichen Produkt mit unkontrollierten Vernetzungen, hohem Anteil an niedermolekularen Produkten und Verfärbungen des Polymerisats.

Ebenso nicht zielführend waren weitere alternative Trocknungsvarianten, wie z. B. azeotrope Trocknung mit einem mit Wasser nicht mischbaren Lösungsmittel oder Vorbehandlung mit Methanol. Ihr Nachteil liegt vor allem im zusätzlichen Aufwand und der Umweltbelastung durch die Verwendung der Lösungsmittel, sowie der Verunreinigung des Polymerisats mit nicht restlos entfernbaren Lösungsmittelrückständen.

Die Aufgabe der Erfindung lag nun darin, ein Verfahren zur Trocknung von Hydrogelen zu finden, das die Nachteile der heute bekannten Verfahren vermeidet. Insbesondere sollte die Trocknungszeit verringert werden, um einerseits die Zeitausbeute zu erhöhen und andererseits die thermische Belastung des Gels zu reduzieren, wodurch eine schonende Trocknung unter weitgehender Vermeidung unkontrollierter Vernetzungen erreicht werden sollte. Weiters sollte auch ein gleichmäßiges, nicht agglomeriertes Produkt erhalten werden.

Die Aufgabe konnte dadurch gelöst werden, daß das Hydrogel in einem beheizten Zylinder mit schnellaufendem Rotor getrocknet wurde. Es ist dabei besonders überraschend, daß trotz des intensiven Impulses, der vom Rotor auf die klebrigen Hydrogelpartikel übertragen wird, im Gegensatz zum Schaufeltrockner, mit langsam laufenden Schaufeln (siehe Vergleichsbeispiel V 9), keine kugelförmigen Agglomerate, keine Anbackungen am Rotor und keine Anbackungen an der Zylinderinnenwand entstehen. Weiterhin ist es überraschend, daß die intensive mechanische Desagglomeration bzw. Verhinderung der Agglomeration zu keiner mechanischen Produktschädigung und Molekulargewichtsdegradation führen.

Gegenstand der vorliegenden Erfindung ist demnach ein Verfahren zur kontinuierlichen Trocknung von hydrophilen Polymergelen in einem beheizten, zylinderförmigen Trockner bei 20 bis 250°C und anschließendem Austrag der getrockneten Polymergele aus dem Trockner, dadurch gekennzeichnet, daß die zu trocknenden Polymergele durch einen im Trockner angeordneten schnelllaufenden Rotor mit einer Umfangsgeschwindigkeit von mindestens 6 m/sec sowohl axial durch den Trockner transportiert, als auch an einer Agglomeration gehindert und teilweise weiter zerkleinert werden.

Beispiele für Polymergele, die gemäß Erfindung getrocknet werden können, sind unvernetzte oder vernetzte, d. h. sowohl wasserlösliche als auch wasserunlösliche Polymere, die sowohl als anionische, kationische oder ampholytische Polyelektrolyte als auch als nichtionogene Polymere vorliegen können. Die wichtigsten wasserlöslichen Polymeren, die aufgrund ihrer Hydrophilie bzw. Wasserlöslichkeit zu Trocknungsproblemen führen, sind in "Chemistry and Technology of Water-Soluble Polymers" Herausgeber C.A. Finch, Plenum Press New York und London, 1983, S. 1 - 11 zusammengestellt. Die chemisch vernetzten Polymergele sind Produkte einer Copolymerisation mit mehrfunktionellen wasserlöslichen Comonomeren oder einer chemischen Vernetzungsreaktion der wasserlöslichen Polymeren. Beispiele für vernetzte wasserunlösliche Hydrogele sind beispielsweise in der "Encyclopedia of Polymer Science and Technology" 2nd ed. Vol. 7, S. 783 - 802 zusammengefaßt.
Mit Hilfe des erfindungsgemäßen Trocknungsverfahrens können beispielsweise getrocknet werden:
Lineare und vernetzte Polyacrylsäure, Polyacrylamid, Poly-N,N-Dimethylacrylamid, Poly-N-Isopropylacrylamide, Polymethacrylsäure, Polymethacrylamid, Polyethylenoxid, Polypropylenoxid, Polyethylensulfonsäure, Polystyrolsulfonsäure, Polyvinylalkohol, Polyvinylamin, Polyvinylmethylether, Polyvinylmethyloxazolidon, Polyvinylpyrrolidon, Polyvinylpyridin, Polyvinylpyridin-N-oxid, Polyvinylsulfat. Auch Biopolymere und ihre Derivate können erfindungsgemäß getrocknet werden. Beispiele dafür sind Cellulosederivate wie z. B. Methyl-, Ethyl- bzw. Carboxymethylcellulose, Stärkederivate wie z. B. Stärkeacetate, Hydroxyethylstärke, Polysaccharide wie z. B. Alginsäure und ihre Salze, ionotrop vernetzte Alginate, Proteine wie z. B. Collagen und Albumine.

Der Trocknungsgrad hängt von der jeweiligen Anwendung des Hydrogels ab und liegt im allgemeinen bei einer Endfeuchte von etwa 5 bis 10 Gew.%. Um eine besonders effektive Trocknung zu erreichen, können die Polymergele vor der Trocknung bevorzugt auf eine Teilchengröße bzw. Schichtdicke von kleiner als 20 mm vorzerkleinert werden.

Die Beheizung des Trockners erfolgt bevorzugt durch Außenbeheizung der Trocknerwand, beispielsweise mittels Dampf, Heizgasen oder elektrisch. Es ist weiters bevorzugt, während der Trocknung einen Gasstrom von 20 bis 250°C durch den Trockner zu leiten. Die Temperatur des Gasstroms hängt von der Temperaturstabilität des Trocknungsgutes ab. Besonders empfindliche Polymere, die durch Temperaturbelastung zur Zerstörung neigen, wie z. B. Proteine, werden nur bei Raumtemperatur getrocknet. Im Falle der synthetischen wasserlöslichen Polymere wie z. B. Acrylsäure- bzw. Acrylamid- Copolymere, ist die Trocknungstemperatur so zu wählen, daß keine Vernetzungen infolge der intermolekularen Imidisierung eintreten. Der Gasstrom kann dabei entweder im Gleichstrom, im Gegenstrom oder als Querstrom über das Trockengut gefördert werden. Es ist auch möglich, den Trockner nur mit Hilfe eines erhitzten Gasstromes zu beheizen. Besonders günstig ist die kombinierte Beheizung über beheizte Trocknerwand und Heißgasstrom. Üblicherweise wird ein Luftstrom über das Trockengut geleitet. Ebenso ist zur Trocknung oxydationsempfindlicher Gele die Verwendung eines Inertgasstromes möglich.

Ein weiterer Vorteil der Erfindung liegt auch darin, daß dank der hohen Effizienz des erfindungsgemäßen Trocknungsverfahren nur kurze Verweilzeiten erforderlich sind, und daß beispielsweise bei Temperaturen von etwa 160°C und Verweilzeiten von etwa 10 bis 30 min keine Vernetzungen auftreten. Durch gezielte Verkürzung der Verweilzeit im Trockner ist eine entsprechende Erhöhung der Trocknungstemperatur bei vielen Polymeren, insbesondere bei bereits vernetzen Polymeren möglich.

Eine bevorzugte Ausführungsform des erfindungsgemäßen Verfahrens stellt die Trocknung unter Vakuum bei Drücken von 0,1 bis 200 mbar dar.

Die laufende Zerstörung von Agglomeraten bzw. die Verhinderung der Agglomeratbildung sowie der Transport der Hydrogelteilchen durch den Trockner erfolgt durch einen schnellaufenden Rotor, der axial im Inneren des Trockners angeordnet ist. Der Rotor ist mit Aufbauten, wie z. B. Armen, Schaufeln oder Paddeln ausgestattet, wodurch Desagglomerierung und axialer Transport der Hydrogelteilchen ermöglicht werden. Die Desagglomerierung der durch den Rotor in eine schnelle Bewegung versetzten Hydrogelteilchen erfolgt vor allem zwischen dem Rotor bzw. seinen Aufbauten und der Innenwand des Trockners. Die Umfangsgeschwindigkeit des Rotors liegt bevorzugt bei 7 bis 20 m/sec. Es sind jedoch auch wesentlich höhere Umfangsgeschwindigkeiten, beispielsweise bis etwa 100 m/sec möglich, wobei die konstruktiven Merkmale des Trockners, wie z. B. Trocknergröße oder Auswuchtung des Rotors für die Begrenzung der Umfangsgeschwindigkeit nach oben verantwortlich sind.

Das erhaltene Trockengut besitzt eine gleichmäßige und enge Korngrößenverteilung, eine anschließende Mahlung bzw. Siebung ist nicht mehr erforderlich. Der Austrag des getrockneten Hydrogels erfolgt am Ende des Trockners durch eine Austragsöffnung.

### Beispiel 1

Durch wäßrige Polymerisation von 69,9 Mol% Acrylamid, 30 Mol% Na-Acrylat und 0,1 Mol% Methylenbisacrylamid als Vernetzer wurde gemäß AT 88/3090 ein Hydrogel mit einem Wassergehalt von 75 Gew.% hergestellt. Das Hydrogel wurde auf etwa 5 mm vorzerkleinert und über eine Dosierschnecke kontinuierlich in einer Menge von 5 kg/h einem 110 Liter doppelmantelbeheizten Zylinder (180°C Manteltemperatur) von 2,27 m Länge und 0,25 m Innendurchmesser mit axialliegendem Rotor, der mit Misch- und Förderschaufeln versehen war, aufgegeben. Die Rotordrehzahl wurde auf 535 Umdrehungen pro min, entsprechend einer Umfangsgeschwindigkeit von 7 m pro sec, eingestellt. Gleichzeitig wurde ein auf 190°C beheizter Heißluftstrom im Gleichstrom zum Produktstrom in einer Menge von 450 m³/h durch den Zylinder geblasen.
Das Hydrogel wurde während des Durchganges durch den Trockenzylinder auf eine Endfeuchte von 7 Gew.% getrocknet. Die mittlere Verweilzeit im Trockenzylinder lag bei 30 Minuten. Das getrocknete Hydrogel wurde mit 1,34 kg/h und einem mittels Siebanalyse bestimmten Mittelwert der Korngröße von 3,5 mm ausgetragen. Es lagen keine Agglomerate vor, eine nachträgliche Zerkleinerung war nicht erforderlich.

### Beispiele 2 bis 7

Das Hydrogel wurde analog zu Beispiel 1 getrocknet, wobei jedoch, wie in Tabelle 1 zusammengestellt, Rotordrehzahl bzw. Umfangsgeschwindigkeit, Eintragsmenge an feuchtem Hydrogel, Manteltemperatur und Temperatur des Luftstromes, der in den Beispielen 6 und 7 im Gegenstrom zum Produktstrom geführt wurde, variiert wurden. Ebenso sind in Tabelle 1 die Austragsmenge an trockenem Hydrogel, die mittlere Verweilzeit im Trockner, Endfeuchte und mittlere Korngröße des getrockneten Hydrogels angegeben.

### Vergleichsbeispiel V 8

Das Hydrogel sollte analog zu Beispiel 1, jedoch mit einer Rotordrehzahl von 200 Umdrehungen pro min, entsprechend einer Umfangssgeschwindigkeit von 2,6 m pro sec, getrocknet werden. Aufgrund der niederen Rotordrehzahl verstopfte sich der Zylinder jedoch nach etwa 15 min mit dem Trockengut, so daß die Trocknung abgebrochen werden mußte.

### Vergleichsbeispiel V9

110 kg des auf etwa 5 mm vorzerkleinerten Hydrogels gemäß Beispiel 1 wurden in einem zylindrischen, doppelmantelbeheizten, diskontinuierlichen 160 Liter Trockner mit Schaufelrührwerk (Fa. Drais) vorgelegt. Die Drehzahl des Rührwerkes wurde auf 42 Umdrehungen pro min eingestellt, entsprechend einer Umfangsgeschwindigkeit von 1,5 m pro sec. Die Manteltemperatur lag bei 180°C. Nach 5 Stunden Trocknungszeit wurde ein Produkt mit 10 Gew.% Endfeuchte erhalten, das in Agglomeraten von 1 bis 20 cm Durchmesser vorlag und nachträglich zerkleinert werden mußte.

**Tabelle 1**

| Trocknung eines Hydrogels mit 75 Gew.% Wassergehalt | | | | | | | | |
|---|---|---|---|---|---|---|---|---|
| Beispiel | 1 | 2 | 3 | 4 | 5 | 6 | 7 | V8** |
| Rotordrehzahl (U/min) | 535 | 800 | 1000 | 1200 | 1500 | 1200 | 800 | 200 |
| Umfangsgeschw. (m/sec) | 7 | 10,5 | 13,1 | 15,7 | 19,6 | 15,7 | 10,5 | 2,6 |
| Eintrag - feuchtes Hydrogel (kg/h) | 5 | 11,9 | 19,9 | 24,8 | 30,0 | 76,9 | 58,7 | - |
| Austrag - trockenes Hydrogel (kg/h) | 1,34 | 3,2 | 5,3 | 6,6 | 8,0 | 21,1 | 16,3 | - |
| mittlere Verweilzeit (min) | 30 | 20 | 12 | 10 | 8 | 25 | 25 | - |
| Manteltemp. (°C) | 180 | 180 | 180 | 180 | 180 | 190 | 190 | 180 |
| Luftstrom (m³/h) | 450 | 450 | 450 | 450 | 450 | 95* | 95* | - |
| Luftstrom (°C) | 190 | 190 | 190 | 190 | 190 | 145* | 145* | - |
| Endfeuchte (Gew.%) | 7 | 7 | 7 | 6 | 6 | 9 | 10 | - |
| mittl. Korngröße (mm) | 3,5 | 3,0 | 2,5 | 1,8 | 1,5 | 2,5 | 2,5 | - |

| | | | | | | | | |
|---|---|---|---|---|---|---|---|---|
| *Luftstrom im Gegenstrom zum Produktstrom | | | | | | | | |
| **Trockenzylinder verstopft | | | | | | | | |

## Patentansprüche

1. Verfahren zur kontinuierlichen Trocknung von hydrophilen Polymergelen in einem beheizten, zylinderförmigen Trockner bei 20 bis 250°C und anschließendem Austrag der getrockneten Polymergele aus dem Trockner, dadurch gekennzeichnet, daß die zu trocknenden Polymergele durch einen im Trockner angeordneten schnellaufenden Rotor mit einer Umfangsgeschwindigkeit von mindestens 6 m/sec sowohl axial durch den Trockner transportiert, als auch an einer Agglomeration gehindert und teilweise weiter zerkleinert werden.

2. Verfahren nach Anspruch 1, dadurch gekennzeichnet, daß die Umfangsgeschwindigkeit des Rotors bei 7 bis 20 m/sec liegt.

3. Verfahren nach Anspruch 1 oder 2, dadurch gekennzeichnet, daß die Trocknerwand von außen beheizt wird.

4. Verfahren nach einem der Ansprüche 1 bis 3, dadurch gekennzeichnet, daß ein auf 20 bis 250°C erwärmter Gasstrom durch den Trockner geleitet wird.

5. Verfahren nach einem der Ansprüche 1 bis 4, dadurch gekennzeichnet, daß die Trocknung unter einem Vakuum von 0,1 bis 200 mbar erfolgt.

## Claims

1. Process for the continuous drying of hydrophilic polymer gels in a heated, cylindrical dryer at 20 to 250°C and subsequent discharge of the dried polymer gels from the dryer, characterized in that, by virtue of a high speed rotor arranged in the dryer and running at a circumferential speed of at least 6m/sec, the polymer gels to be dried are not only conveyed axially through the dryer but also prevented from agglomerating and partially further comminuted.

2. Process according to Claim 1, characterized in that the circumferential velocity of the rotor is 7 to 20 m/sec.

3. Process according to Claim 1 or 2, characterized in that the dryer wall is heated externally.

4. Process according to one of Claims 1 to 3, characterized in that a current of gas at 20 to 250°C is passed through the dryer.

5. Process according to one of Claims 1 to 4, characterized in that drying is carried out in vacuo at a pressure of 0.1 to 200 mbar.

## Revendications

1. Procédé pour la dessiccation continue de gels polymères hydrophiles dans un dessiccateur chauffé de forme cylindrique, à une température située entre 20 et 250°C suivi de l'évacuation des gels polymères séchés du dessiccateur, caractérisé par le fait que les gels polymères à sécher sont transportés axialement à travers le dessiccateur au moyen d'un rotor rapide agencé dans le dessiccateur avec une température circonférentielle d'au moins 6 m/sec, qu'ils sont entravés dans leur agglomération et qu'ils sont fractionnés encore davantage.

2. Procédé selon revendication 1, caractérisé par le fait que la vitesse circonférentielle du rotor se situe entre 7 et 20 m/sec.

3. Procédé selon revendication 1 ou 2, caractérisé par le fait que la paroi du dessiccateur est chauffée de l'extérieur.

4. Procédé selon l'une des revendications 1 à 3, caractérisé par le fait qu'un flux gazeux chauffé à une température située entre 20 à 250°C est envoyé à travers le dessiccateur.

5. Procédé selon l'une des revendications 1 à 4, caractérisé par le fait que la dessiccation s'effectue sous l'influence d'un vide de 0,1 à 200 mbar.
